## Europäisches Patentamt
## European Patent Office
## Office européen des brevets

(19)

(11) Numéro de publication: **0 249 526**
**B1**

(12) **FASCICULE DE BREVET EUROPEEN**

(45) Date de publication du fascicule du brevet:
**13.06.90**

(21) Numéro de dépôt: **87401214.9**

(22) Date de dépôt: **01.06.87**

(51) Int. Cl.⁵: **B29C 67/18,** B29D 9/00,
B32B 31/20
// B42D15/02

(54) **Machine pour la plastification d'un élément de forme plate par application et fusion d'un film en matière thermo-plastique.**

(30) Priorité: **10.06.86 FR 8608360**

(43) Date de publication de la demande:
**16.12.87 Bulletin 87/51**

(45) Mention de la délivrance du brevet:
**13.06.90 Bulletin 90/24**

(84) Etats contractants désignés:
**CH DE ES FR GB IT LI**

(56) Documents cités:
**EP-A- 0 134 820**
**CH-A- 376 652**
**DE-A- 2 254 708**
**DE-A- 3 413 053**
**DE-B- 1 089 539**
**GB-A- 2 019 779**

**IBM TECHNICAL DISCLOSURE BULLETIN,**
**vol. 22, no. 11, April 1980, pages 5067,5068, New York,**
**US; R.L. HANSEN: "Epoxy gel oven"**

(73) Titulaire: **TECHNIQUES INDUSTRIELLES DE**
**PLASTIFICATION, 20, rue Louis-Braille, F-91420 Z.I.**
**Morangis(FR)**

(72) Inventeur: **Pineau, Alain, 27 Avenue des Peupliers,**
**F-91210 Draveil(FR)**

(74) Mandataire: **Tony-Durand, Serge, Cabinet**
**Tony-Durand 77, rue Boissière, F-75116 Paris(FR)**

## Description

La présente invention concerne la plastification de documents ou autres éléments de forme plate par application et fusion d'un film en matière thermoplastique sur l'une au moins des deux faces d'un tel élément.

Une telle plastification est utilisée de façon courante pour assurer la protection et/ou la mise en valeur de toutes sortes de documents, par exemple des photographies ou affiches publicitaires, des cartes géographiques, etc... Cependant, cette technique est également appliquée à des éléments autres que des documents sur papier ou similaire.

Pour réaliser une plastification de ce genre, il convient de disposer une feuille en matière thermoplastique sur l'une au moins des deux faces du document à traiter et de placer sur celle-ci une plaque métallique, généralement une plaque en acier inoxydable brillant, puis de presser l'ensemble en lui faisant subir, successivement un premier traitement de chauffage pour obtenir le ramollissement et la fusion du film en matière plastique par chauffage, puis, un second traitement de refroidissement pour réaliser la stabilisation de l'ensemble dans l'état obtenu.

Dans les installations anciennes de plastification, les deux opérations ainsi prévues s'effectuent dans deux appareils distincts comportant chacun une presse de serrage et dont l'un comporte par ailleurs des moyens de chauffage cependant que l'autre est équipé de moyens de refroidissement. Cependant cette façon d'opérer exige un transfert des documents d'un appareil de traitement à l'autre, ce qui présente un certain nombre d'inconvénients et notamment celui d'augmenter la durée du temps de traitement.

Pour accélérer l'opération de plastification d'une série de documents, il a déjà été proposé de traiter ceux-ci dans des machines conçues pour assurer le traitement de ceux-ci "en continu".

Ainsi le brevet suisse CH-B 376.652 décrit une machine qui comporte deux bandes métalliques de pressage formant deux circuits fermés disposés l'un en regard de l'autre et qui comportent deux brins en contact. L'agencement est tel que les documents à traiter puissent être introduits entre ces deux brins à l'une des extrémités de la machine en étant placés entre deux films en matière plastique qui s'engagent également entre les deux brins de pressage des deux bandes métalliques continues. Ainsi ces deux bandes entraînent avec elles à la fois chacun des documents à traiter et les deux films en matière plastique pour faire passer cet ensemble successivement à l'intérieur d'un poste de chauffage, assurant le ramollissement des films en matière plastique, puis à l'intérieur d'un poste de refroidissement réalisant la stabilisation de chaque document traité.

La demande de brevet européen EP-A 134.820 décrit une machine répondant à la même conception de base.

Cependant les machines de ce genre présentent deux inconvénients en raison desquels il n'est pas possible d'obtenir une plastification satisfaisante des documents à traiter.

Le premier de ces inconvénients réside dans le fait que l'utilisation de bandes continues de pressage ne permet pas d'obtenir le même résultat que dans le cas où chaque document à traiter serait disposé à l'intérieur d'une presse distincte, d'une part pendant le traitement de ramollissement par chauffage et d'autre part durant le traitement de stabilisation par refroidissement. En effet, les conditions de pressage par des bandes continues sont beaucoup moins bonnes et ne peuvent pas s'exercer parfaitement sur toute la surface des documents à traiter. Par ailleurs les pressions de serrage ne peuvent pas être différentes dans le cas de l'une et l'autre des deux opérations à réaliser. Or lors du premier traitement de ramollissement il suffit d'exercer une faible pression de serrage, alors que durant le traitement de stabilisation il faut appliquer une pression très importante pour écraser la ou les pellicules de matière plastique contre le document à traiter. Du reste les pressions à prévoir dans l'un et l'autre cas peuvent varier dans une proportion de 1 à 10.

Le second inconvénient important des machines mentionnées ci-dessus réside dans le fait qu'avec des bandes continues de serrage, il n'est pas possible d'obtenir des conditions précises de traitement dans chacun des postes de travail et que par ailleurs ces bandes subissent des déformations préjudiciables du fait des échauffements et refroidissements successifs subis par les différentes parties de ces bandes. En ce qui concerne le premier point il faut noter que les parties des bandes de serrage se trouvant dans le poste de chauffage transmettent leur chaleur aux parties voisines qui sont alors à l'intérieur du poste de refroidissement. Ceci perturbe donc les conditions du refroidissement. En ce qui concerne le second point il est bien évident que les échauffements et refroidissements de parties très voisines d'une même bande entraînent des déformations de celle-ci, de sorte qu'elle ne peut plus s'appliquer parfaitement par toute sa surface sur le film correspondant en matière plastique.

Le document DE-A-3 413 053 décrit une machine de plastification correspondant à une solution plus avantageuse que les précédentes, mais qui ne résoud pas encore complètement le problème posé. Dans cette machine, il est prévu deux séries de plaques individuelles de pressage disposées les unes à la suite des autres pour former deux boucles fermées situées l'une au dessus de l'autre. L'agencement est tel que dans chaque poste de travail — respectivement de chauffage et de refroidissement — deux plaques de pressage appartenant à l'une et l'autre bandes se trouvent situées de part et d'autre d'un document à plastifier. Des moyens appropriés de commande et de synchronisation assurant l'avance par intermittence des deux boucles formées par les deux séries de plaques de pressage. Ceci constitue donc une solution meilleure que l'emploi de bandes métalliques continues. Toutefois, les plaques individuelles de pressage prévues dans la machine en cause possèdent une liberté très restreinte de mouvement. En effet ces plaques sont attachées les unes à la suite des autres en s'articulant simplement à l'une et l'autre extrémités. En conséquence chaque plaque est attachée d'une part à la plaque précédente et d'autre part à la plaque suivante. Dans ces conditions ces plaques ne présentent pas une liberté de mouvement suffisante pour pouvoir prendre en toute liberté des positions optimum de contact avec chaque document à plastifier lors d'une opération de pressage, soit à l'intérieur du poste de chauffage, soit à l'intérieur du poste de refroidissement.

C'est pourquoi la présente invention a pour but de réaliser une machine de plastification conçue pour effectuer "en continu" le traitement d'une série de documents, mais sans avoir les inconvénients des machines actuelles du type rappelé précédemment.

A cet effet l'invention a pour objet une machine pour la plastification d'un document de forme plate par application et fusion d'un film en matière thermoplastique sur l'une au moins des deux faces d'un tel document par passage successivement dans un poste de chauffage et un poste de refroidissement alors que ces documents sont serrés entre deux plaques métalliques individuelles de pressage assurant leur entraînement sur toute la longueur de la machine et appartenant à deux séries de telles plaques disposées les unes à la suite des autres pour former deux boucles fermées disposées l'une au-dessus de l'autre, chaque poste de travail, respectivement de chauffage et de refroidissement, comportant une presse dont les mâchoires sont aptes à serrer entre elles deux plaques de pressage disposées l'une au-dessus de l'autre, avec le document placé entre elles et le ou les films destinés à constituer les feuilles de plastification, des moyens appropriés de commande et de synchronisation assurant l'avance par intermittence des deux boucles formées par les deux séries de plaques de pressage pour que chaque paire de plaques complémentaires, appartenant à l'une et l'autre série, reste pendant une durée suffisante de stationnement à l'intérieur de chaque poste de travail, caractérisée en ce que:

dans chaque série de plaques de pressage, les plaques successives sont indépendantes les unes des autres, et chacune de ces plaque s'articule librement sur des chaînes ou similaires, qui sont disposées de part et d'autre, pour constituer les moyens d'entraînement de ces deux bandes fermées de plaque de pressage.

Ainsi dans la présente machine chaque document à traiter se trouve emprisonné entre deux plaques complémentaires de pressage et celles-ci l'accompagnent pendant toute la durée de passage de ce document à l'intérieur de cette machine. Comme les plaques de pressage de chaque série sont indépendantes les unes des autres, il n'y a pas interaction préjudiciable de l'une sur l'autre. Par ailleurs le pressage des documents s'effectue dans les meilleures conditions dans chacun des postes de travail – chauffage ou refroidissement – puisque celui-ci est réalisé au moyen de presses distinctes.

Dans une forme de réalisation avantageuse de la présente machine, les plaques mobiles de pressage des deux séries supérieure et inférieure sont suspendues à leur axe d'articulation et celles de la série inférieure sont pourvues d'éléments de lestage assurant leur maintien dans une position horizontale.

Cependant, d'autres particularités et avantages de la présente machine apparaîtront au cours de la description suivante d'un exemple de réalisation de celle-ci. Cette description est donnée en référence au dessin annexé à simple titre indicatif et sur lequel:

La figure 1 est une vue schématique en coupe longitudinale d'une machine de plastification selon l'invention.

La figure 2 est une vue schématique en plan de dessus de la partie inférieure de cette machine, la partie supérieure de celle-ci ayant été omise pour simplifier le dessin et permettre une meilleure compréhension de celui-ci.

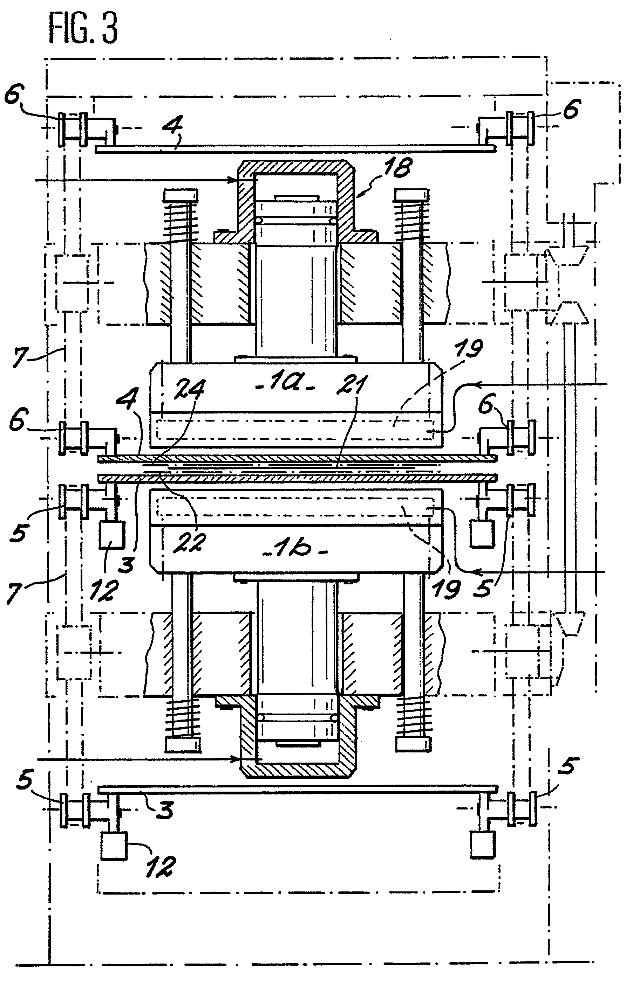

La figure 3 est une vue en coupe transversale selon la ligne III–III de la figure 1, mais à échelle différente.

La figure 4 est une vue schématique et partielle en élévation de côté de l'extrémité d'entrée de la présente machine.

La figure 5 est une vue en coupe longitudinale de l'une des plaques mobiles de pressage de la série inférieure.

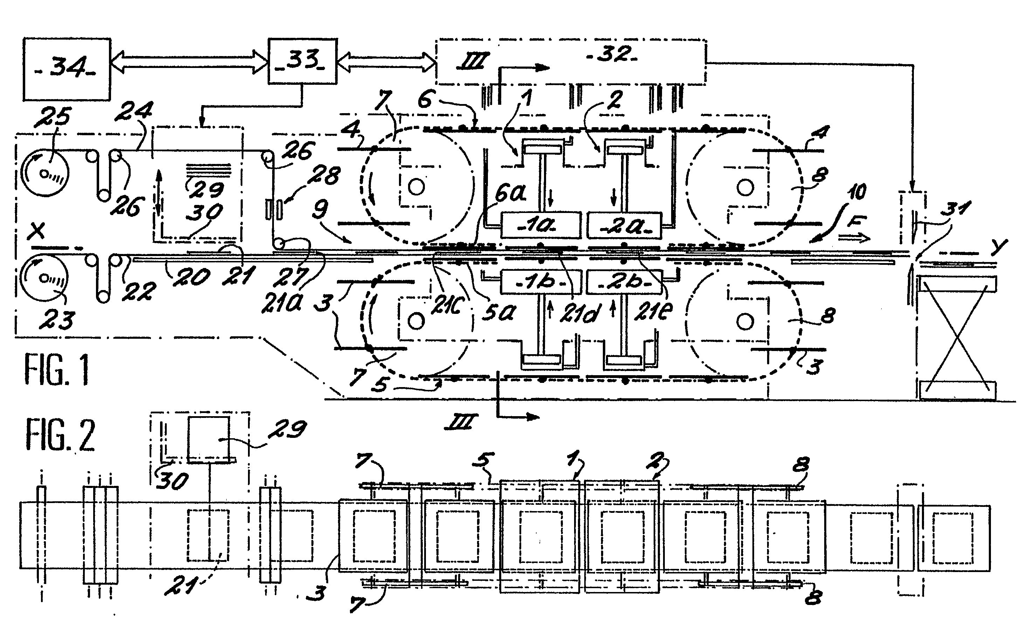

Comme déjà indiqué, la présente machine comprend deux presses de travail désignées par les références générales 1 et 2 sur la figure 2, la première d'entre elle étant affectée à l'opération de plastification proprement dite et l'autre à l'opération ultérieure de stabilisation. Ces deux presses sont intégrées l'une à la suite de l'autre à l'intérieur de la présente machine.

Il est par ailleurs prévu deux séries de plaques mobiles de pressage, à savoir une série inférieure de plaque 3 et une série supérieure de plaque 4. Les plaques de l'une et l'autre de ces deux séries sont attachées à des moyens d'entraînement qui leur impartissent une trajectoire horizontale de travail au cours de laquelle chaque plaque de l'une des séries se trouve en regard d'une plaque de l'autre et passe avec celle-ci à l'intérieur des deux presses 1 et 2.

Dans l'exemple représenté, les moyens d'entraînement des plaques individuelles de pressage de chaque série sont constitués par deux chaines 5 et 6 fermées sur elles-mêmes et qui sont disposées de part et d'autre des plaques correspondantes. Ces chaines passent à leurs extrémités sur des roues dentées 7 et 8 de renvoi et/ou d'entraînement. Ces deux groupes de chaines mobiles sont disposés l'un au dessus de l'autre comme représenté sur la figure 1 et l'agencement est tel que les chaines du groupe inférieur et celles du groupe supérieur comportent deux brins 5a et 6a disposés parallèlement à proximité l'un de l'autre, de part et d'autre d'un plan horizontal X-Y, qui constitue le plan de circulation des documents à traiter à l'intérieur de la machine.

Les roues dentées d'entraînement des chaines des deux groupes tournent en sens inverse de façon que ces brins 5a et 6a des chaînes d'entraînement se déplacent vers l'avant selon la flèche F, depuis l'extrémité d'entrée 9 de la machine jusqu'à son extrémité 10 de sortie. Ceci correspond du reste à la trajectoire de travail des plaques de pressage de l'une et l'autre des deux séries.

Ces plaques de pressage sont montées librement articulées sur les chaines correspondantes d'entraînement 5 et 6, et ce autour d'axes horizontaux 11 portés par ces chaines. Ces axes sont disposés à l'aplomb de la ligne transversale médiane de chaque plaque. Ainsi, sous le simple effet de leur propre poids, les plaques 4 de la série supérieure se maintiennent horizontalement au-dessus des axes correspondants.

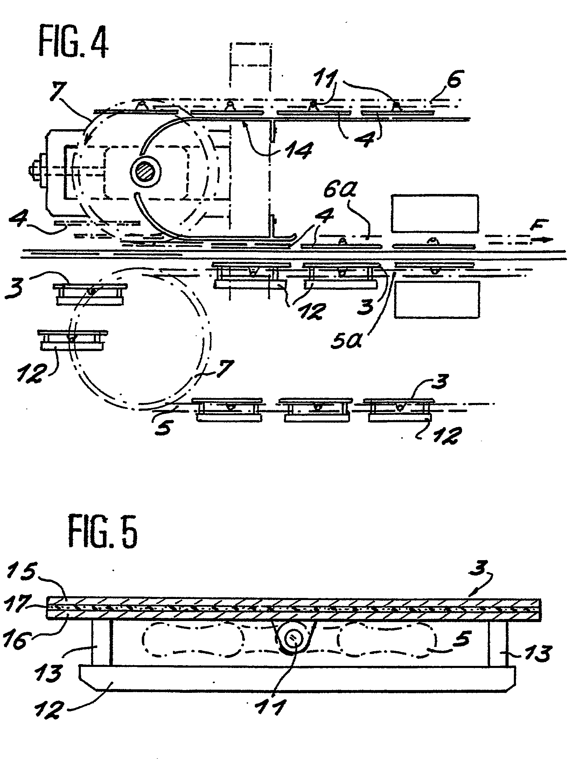

Quant aux plaques mobiles 3 de la série inférieure, elles portent, sur chaque côté, un barreau horizontal 12 de lestage comme représenté sur la figure 5. Ces barreaux sont fixés par l'intermédiaire des doigts 13 dont la longueur est telle que ces barreaux sont disposés au-dessous du niveau des axes d'articulation 11 de la plaque correspondante. Ainsi, les plaques 3 de la série inférieure se trouvent constamment maintenues dans une position horizontale, même à l'une et l'autre extrémités de la machine, ainsi que cela apparait sur les figures 1 et 4.

Cependant, des glissières de guidage 14 peuvent être en plus prévues, notamment à l'une et l'autre extrémités de la machine (voir figure 4).

Pour éviter que les documents et films à traiter soient soumis à des variations trop brutales de température, chaque plaque de pressage est constituée par la combinaison de deux plaques métalliques 15 et 16 entre lesquelles est interposée une feuille 17 en caoutchouc ou autre matériau similaire susceptible de servir en quelque sorte d'amortisseur pour le transfert de température de l'une des plaques à l'autre et pour différer ainsi ce transfert afin de l'étaler dans le temps pour éviter des variations trop brutales (voir figure 5).

Les deux presses de travail 1 et 2 comportent une structure classique pour des presses affectées à des opérations du type en cause. Chacune d'entre elles comporte dont deux plateaux mobiles de pressage respectivement 1a, 1b, et 2a, 2b, actionnés par des vérins hydrauliques 18. Mais bien entendu dans chaque presse, un seul plateau peut-être mobile, l'autre consistant en un sommier fixe. Les plateaux 1a et 1b de la première presse comportent des moyens de chauffage appropriés, par exemple des résistances électriques 19. Mais ces moyens pourraient tout aussi bien consister en un circuit de liquide de chauffage. Quant aux plateaux de la presse 2, ils comportend des moyens de refroidissement, par exemple un circuit de liquide de refroidissement. En regard de l'extrémité d'entrée 9 de la machine, il est prévu un plateau horizontal 20 destiné à servir de support à chaque document 21 à traiter, avant son introduction dans cette machine. Sur ce plateau est étendu un premier film thermo-plastique 22 débité à partir d'un rouleau 23 d'alimentation. Ce film s'étend ensuite à l'intérieur de la machine sur toute la longueur de celle-ci

Un second film thermo-plastique 24, débité à partir d'un rouleau d'alimentation 25, est également dévidé sur toute la longueur de la machine au dessus des documents à traiter. Cependant, des rouleaux de renvoi 26 maintiennent ce film écarté à une certaine distance au-dessus de l'emplacement où chaque document 21 à traiter est disposé sur le plateau 20 contre le film inférieur 22. Mais le film supérieur est ensuite lui-même guidé sur chaque document à traiter et ce, avant son introduction dans la machine, grâce à un rouleau de renvoi 27.

Peu avant celui-ci, il est prévu un dispositif 28 destiné à éliminer l'électricité statique que peut comporter ce film. Dans ces conditions, seul le film inférieur 22 comporte de l'électricité statique, ce qui a pour effet que lors de sa mise en place chaque document 21 se trouve immobilisé sur ce film et ne risque pas de subir un déplacement intempestif lors de l'application du film supérieur 24.

Avant leur dépose sur le plateau 20, les documents à traiter sont disposés sous forme d'une pile 29 dans un magasin d'alimentation ou autre dispositif similaire. Ils sont ensuite déposés l'un après l'autre par un dispositif d'alimentation du type de ceux utilisés dans l'industrie de l'imprimerie et qui est schématisé par le bras mobile de manoeuvre 30 sur les figures 1 et 2. Cependant il serait également possible de prévoir tout autre dispositif approprié, par exemple un robot de chargement.

En regard de la sortie 10 de la machine, il est prévu un dispositif de découpe destiné à séparer les un des autres les documents traités à l'intérieur de celle-ci. Sur la figure 1, ce dispositif est schématisé par deux couteaux mobile 31 disposés transversalement. Cependant, il est bien évident que le dispositif de commande ainsi prévu pourrait être de conception différente. Ainsi il pourrait s'agir d'un dispositif de coupe "en forme", c'est-à-dire susceptible de réaliser, en une seule opération, une coupe tout autour de chaque document.

L'avance pas à pas des deux paires de plaques de pressage, qui accompagnent chaque document à traiter au cours de son séjour à l'intérieur de la machine, est assurée par un dispositif de commande déterminant les temps de stationnement voulus dans les deux presses de travail. Bien entendu, le fonctionnement de celles-ci est également synchronisé avec ce mouvement d'avance pas à pas. Du reste, l'ensemble peut être commandé par un coffret de commande 32 commandant également le dispositif de découpe prévu à la sortie. Ce coffret de commande est synchronisé avec un autre coffret de commande 33 assurant la commande du dispositif d'alimentation, ces deux coffrets étant sous la dépendance d'un dispositif central 34 de commande générale qui peut comporter un système de programmation, ainsi que tous les organes voulus de réglage.

**Le fonctionnement de la présente machine est le suivant :**

Chaque document 21 à traiter est déposé au moment voulu sur le plateau 20 de préparation sur lequel s'étend déjà le film 22. Cette dépose est assurée dans une position précise par le dispositif d'alimentation schématisé par le bras mobile 30.

Lors d'une nouvelle avance des chaînes latérales d'entraînement 5 et 6, le film inférieur 22 se trouve tiré en avant et il entraine avec lui le document 21 qui a été précédemment déposé sur lui. Ce document vient alors dans la position 21a au-dessous d'un film supérieur 24. A partir de ce moment, ce document est emprisonné entre les deux films 22 et 24.

Puis après une position intermédiaire d'arrêt, le document en cause pénètre dans l'extrémité d'entrée 9 de la machine et il est ainsi amené à s'engager entre une plaque inférieure 3 et une plaque supérieure 4 de pressage. A partir de la position correspondante 21c, ce document se trouve toujours emprisonné entre les deux plaques correspondantes qui l'accompagnent au cours de tout son déplacement à l'intérieur de la machine.

Dans la position suivante 21d, le document en cause se trouve placé à l'intérieur de la première presse 1 et il y stationne le temps voulu pour l'opération de ramollissement et de fusion des films en matière thermo-plastique. Ce temps de traitement peut être de l'ordre de 30 à 90 secondes, par exemple 40 secondes.

Lorsque cette première opération a été achevée, le document considéré se trouve entraîné jusque dans la position 21e à l'endroit de la seconde presse 2. Dans celle-ci, il subit l'opération de stabilisation par refroidissement entre les plateaux de cette presse. Bien entendu, la durée de cette opération est exactement la même que la précédente puisque pendant ce temps le document suivant subit pour sa part la première opération de plastification à l'endroit de la presse 1.

Enfin, après que les plaques mobiles de pressage se soient écartées du document considéré à l'extrémité de sortie 10 de la machine, celui-ci parvient au poste 31 de découpe, après une ou plusieurs positions intermédiaires.

Il convient de relever le rôle important que jouent certaines caractéristiques de la présente machine pour le bon fonctionnement de celle-ci. Ainsi, le montage en quelque sorte "flottant" des plaques mobiles de pressage permet que celles-ci viennent se placer convenablement de part et d'autre de chaque document à traiter et qu'elles assurent ensuite l'exécution convenable du pressage de chaque document au cours des deux opérations effectuées à l'endroit des presses 1 et 2. Quant au montage de ces plaques de pressage sur les chaînes latérales d'entraînement 5 et 6, il a pour avantage que ces plaques présentent une mobilité suffisante dans le sens vertical pour pouvoir subir les opérations de pressage dans l'une et l'autre des deux presses de traitement.

L'exemple d'utilisation de la présente machine, qui est décrit ci-dessus, concerne la plastification d'un document entre deux films en matière thermo-plastique. Cependant, cette machine pourrait également être utilisée pour la plastification d'une seule face d'un tel document. Auquel cas, seul le film inférieur 22 subsisterait, de sorte que la face à plastifier devrait être placée contre ce film.

Il faut également rappeler que la machine selon l'invention peut être employée pour la plastification d'éléments de forme plate, autres que des documents sur papier. Ainsi, elle pourrait être utilisée pour plastifier des cartes en matière thermo-plastique ou des plaques en métal, ou bien encore des plaques portant des circuits électroniques imprimés ou gravés, etc... Par ailleurs, dans le cas d'éléments ou documents de surfaces restreintes, il serait possible de plastifier simultanément plusieurs de ceux-ci. En effet, le dispositif d'alimentation 30 est de préférence conçu pour pouvoir déposer côte à côte plusieurs éléments de dimention restreinte.

Cependant, la présente machine pourrait également être utilisée pour la fabrication de cartes à mémoire. Dans un tel cas, le corps même d'une telle carte pourrait être constitué à partir d'un film en matière plastique interposé entre les deux films 22 et 24 et qui comporterait, à l'endroit de l'emplacement de chaque carte, un évidemment destiné à recevoir un élément magnétique de mémoire, celui-ci étant ensuite emprisonné entre les deux films 22 et 24 après l'opération de plastification.

Par rapport aux machines antérieures de plastification par traitement continu, la présente machine comporte deux avantages essentiels à savoir :

a) d'une part le serrage de chaque document à traiter entre deux plaques distinctes de pressage,

b) d'autre part le serrage de ces plaques et de chaque document correspondant par des presses distinctes dans l'un et l'autre des deux postes de travail.

En ce qui concerne le premier point il est évident que l'emploi de deux séries de plaques distinctes de pressage permet d'éviter les inconvénients inhérents aux machines comportant des bandes continues de pressage. Ainsi les plaques individuelles de pressage peuvent s'appliquer parfaitement par toute leur surface sur les documents à traiter puisqu'il n'y a pas interaction d'une plaque sur l'autre étant donné qu'elles s'articulent librement sur les chaines d'entrainement et que celles-ci sont par ailleurs relativement souples. Par ailleurs il n'y a pas communication intempestive de chaleur d'une paire de plaque de pressage à l'autre.

En ce qui concerne le second point, il convient d'observer que l'emploi des presses distinctes dans chacun des postes de travail permet d'assurer des conditions précises de pressage et tout spécialement des valeurs différentes de serrage à l'endroit de l'un et l'autre postes de travail, la pression devant être beaucoup plus considérable à l'endroit du poste de refroidissement qu'à l'endroit du poste de chauffage.

Bien entendu la machine selon l'invention peut faire l'objet des diverses variantes de réalisation. Ainsi, elle peut éventuellement comporter un plus grand nombre de presses de traitement pour subdiviser les deux opérations de plastification et de stabilisation. En effet, pour la première opération il est possible de prévoir une première presse de pré-chauffage et une seconde de chauffage maximum. De même pour la seconde opération, il est possible de prévoir une première presse pour le début du refroidissement et une seconde pour l'achèvement de celui-ci.

## Revendications

1. Machine pour la plastification d'un document (21) de forme plate par application et fusion d'un film en matière thermo-plastique (22, 24) sur l'une au moins des deux faces d'un tel document par passage successivement dans un poste de chauffage et un poste de refroidissement alors que ces documents sont serrés entre deux plaques métalliques individuelles de pressage (3, 4) assurant leur entraînement sur toute la longueur de la machine et appartenant à deux séries de telles plaques disposées les unes à la suite des autres pour former deux boucles fermées disposées l'une au-dessus de l'autre, chaque poste de travail, respectivement de chauffage et de refroidissement, comportant une presse (1 ou 2) dont les mâchoires sont aptes à serrer entre elles deux plaques de pressage (3, 4) disposées l'une au-dessus de l'autre, avec le document (21) placé entre elles et le ou les films (22, 24) destinés à constituer les feuilles de plastification, des moyens appropriés de commande et de synchronisation assurant l'avance par intermittence des deux boucles formées par les deux séries de plaques de pressage (3 et 4) pour que chaque paire de plaques complémentaires, appartenant à l'une et l'autre séries, reste pendant une durée suffisante de stationnement à l'intérieur de chaque poste de travail caractérisée en ce que:
dans chaque série de plaques de pressage (3, 4), les plaques successives sont indépendantes les unes des autres, et chacune de ces plaques (3, 4) s'articule librement sur des chaînes (5 et 6) ou similaires, qui sont disposées de part et d'autre, pour constituer les moyens d'entraînement de ces deux bandes fermées de plaque de pressage.

2. Machine de plastification selon la revendication 1, caractérisé en ce que les plaques mobiles de pressage (3) des deux séries supérieure et inférieure, sont suspendues à leur axe d'articulation (11) et celles de la série inférieure sont pourvues d'éléments de lestage (12) assurant leur maintien dans une position horizontale.

3. Machine selon l'une des revendications précédentes, caractérisée en ce que la plastification d'un élément plat (21) sur ses deux faces, il est prévu deux bobines (23 et 25) d'alimentation en films thermoplastique ainsi que différents rouleaux de renvoi amenant les deux films correspondant (22 et 24) de part de d'autre de chaque élément (21) à traiter, et ce ayant l'engagement de l'ensemble entre des plaques mobiles de pressage (3 et 4).

4. Machine selon la revendication 3, caractérisée en ce qu'en regard de l'extrémité d'entrée (9) de cette machine, il est prévu un plateau (20) de dépose de chaque document à traiter par un dispositif (30) d'alimentation et en ce que le film supérieur (24) est maintenu écarté de ce plateau par des rouleaux de renvoi (26) pour être amené ultérieurement au dessus de chaque élément à traiter (21) après sa dépose sur le film inférieur (22).

## Patentansprüche

1. Maschine zum Überziehen eines flächigen Gegenstands (21) durch Aufbringen und Schmelzen eines thermoplastischen Films (22, 24) auf mindestens einer der beiden Oberflächen dieses Gegenstands, in dem der Gegenstand schrittweise durch eine Heizstation und eine Kühlstation geführt wird und die Gegenstände zwischen zwei einzelnen Preßplatten (3, 4) zusammengedrückt werden, die die Mitnahme der Gegenstände über die gesamte Länge der Maschine sicherstellen und zu zwei Reihen von solchen Preßplatten gehören, die einander zugeordnet vorgesehen sind und zwei übereinander angeordnete Endlosschleifen bilden, wobei jede Arbeitsstation, also die Heizstation und die Kühlstation, eine Preßeinrichtung (1 oder 2) aufweist, deren Preßbacken zwischen sich zwei übereinander befindliche Preßplatten (3, 4) und dazwischen den Gegenstand (21) und den oder die Filme (22, 24), die die Überzugshülle bilden, zusammendrücken, wobei Steuer- und Synchronisationseinrichtungen für die schrittweise Vorwärtsbewegung der beiden Endlosschleifen, die von den beiden Reihen von Preßplatten (3, 4) gebildet werden, vorgesehen sind, damit jedes Paar von einander zugeordneten Preßplatten die zu der einen und der anderen Reihe gehören, für eine ausreichende Zeitdauer in jeder Arbeitsstation verbleibt, dadurch gekennzeichnet, daß in jeder Reihe der Preßplatten (3, 4) die aufeinanderfolgenden Platten unabhängig voneinander vorgesehen sind, und daß jede Preßplatte (3, 4) auf einer jeweils vorgesehenen Kette (5 und 6) o. dgl. frei schwenkbar gelagert ist, die die Mitnahmemittel der beiden Endlosschleifen der Preßplatten bilden.

2. Maschine zum Überziehen nach Anspruch 1, dadurch gekennzeichnet, daß die beweglichen Preßplatten (3) der oberen und der unteren Reihe an ihren Schwenkachsen (11) aufgehängt sind, und daß die Preßplatten der unteren Reihe mit Gewichtselementen (12) zur Aufrechterhaltung der Horizontalposition versehen sind.

3. Maschine zum Überziehen nach einem der vorangehenden Ansprüche 1 und 2, dadurch gekennzeichnet, daß für das beidseitige Überziehen des flächigen Gegenstands zwei Rollen (23 und 24) von thermoplastischem Film sowie verschiedene Umlenkrollen jeweils zur Führung der beiden Filme (22 und 24) relativ zu jedem zu behandelnden Gegenstand vorgesehen sind, und zwar vor dem Kontakt mit den beweglichen Preßplatten (3 und 4).

4. Maschine zum Überziehen nach Anspruch 3, dadurch gekennzeichnet, daß relativ zur Eingangsseite (9) der Maschine ein Auflagetisch (20) für die zu behandelnden Gegenstände mittels einer Zufuhreinrichtung (30) vorgesehen ist, und daß der obere Film (24) vermittels Umlenkrollen (26) zunächst abgehoben von dem Auflagetisch und schließlich nach dem Auflegen jedes zu behandelnden Gegenstands (21) auf den unteren Film (22) über diesen geführt wird.

## Claims

1. Machine for the plastic coating of a flat document (21) by application and fusion of a thermoplastic film (22, 24) on at least one of the two faces of a document of this type by passing successively through a heating station and a cooling station while these documents are clamped between two individual metallic pressing plates (3, 4) which ensure the displacement of these latter over the entire length of the machine and form part of two series of such plates arranged in succession so as to form two closed loops placed one above the other, each work station respectively for heating and cooling being constituted by a press (1 or 2), the jaws of which are capable of clamping between them two pressing plates (3, 4) located one above the other with the document (21) placed between them and the film or films (22, 24) which are intended to constitute the plastic coating sheets, suitable control and synchronization means for producing intermittent feed motion of the two loops formed by the two series of pressing plates (3 and 4) so as to ensure that each pair of complementary plates forming part of both series remains within each work station during a sufficiently long stationary period, characterized in that, in each series of pressing plates (3, 4), the successive plates are independent of each other and each of these plates (3, 4) is freely articulated on chains (5 and 6) or the like which are placed on each side so as to constitute the means for driving these two closed-loop pressing-plate belts.

2. Plastic coating machine in accordance with claim 1, characterized in that the movable pressing plates (3) of the two top and bottom series are suspended from their pivot-pins (11) and those of the bottom series are provided with weighting elements (12) for ensuring that they are maintained in a horizontal position.

3. Machine in accordance with one of the preceding claims, characterized in that, for the plastic coating of a flat element (21) on both faces, provision is made for two reels (23 and 25) for feeding thermoplastic films as well as different guide rollers for bringing the two corresponding films (22 and 24) into position on each side of each element (21) to be treated before the assembly engages between movable pressing plates (3 and 4).

4. Machine in accordance with claim 3, characterized in that, opposite to the feed end (9) of said machine, a plate (20) is provided for depositing each document to be treated by means of a feed device (30) and that the top film (24) is maintained at a distance from said plate by means of guide rollers (26) so as to be subsequently brought into position above each element (21) to be treated after it has been deposited on the bottom film (22).

FIG. 1

FIG. 2

EP 0 249 526 B1

FIG. 3

FIG. 4

FIG. 5